# EUROPÄISCHE PATENTANMELDUNG

(11) **EP 1 207 492 A2**
(43) Veröffentlichungstag der Anmeldung: **22.05.2002**
(21) Anmeldenummer: 01127547.6
(22) Anmeldetag: 19.11.2001
(51) Int. Cl.: G06K 19/07

(54) **Chipkarte**

(30) Priorität: 20.11.2000 DE 10057477
(71) Anmelder: Orga Kartensysteme GmbH, 33104 Paderborn (DE)
(72) Erfinder: König, Karl-Heinz, Dr., 24220 Flintbek (DE); Schenk, Jörg, 13507 Berlin (DE)

(57) **Zusammenfassung**

Es wird eine Chipkarte mit einem Prozessorbaustein zur Speicherung und Bearbeitung von elektronischen Daten, einer Schnittstelle zum Datenaustausch der im Prozessorbaustein vorhandenen Datenmengen und einer Anzeigevorrichtung für einzelne Daten vorgestellt, bei der der Prozessorbaustein erfindungsgemäß mindestens einen Analogverstärker und Impedanzwandler zur Verarbeitung von extern gewonnenen Sensorsystemdaten, eine Baueinheit zur Erzeugung eines prozessorinternen Systemtaktes, eine Baueinheit zur Umschaltung zwischen internem und externem Systemtakt und einen Analogdigitalwandler aufweist. Die aufgeführten, innerhalb des Prozessorbausteines integrierten Bauelemente ermöglichen es, mittels eines innerhalb des Prozessorbausteines vorhandenen Betriebssystems diesen an unterschiedliche Anwendungsfälle für die Chipkarte anzupassen, so dass wie bislang üblich, der zusätzliche Einbau von Bauelementen in den Chipkartenkörper zur Verwendung dieser Chipkarte auf unterschiedlichen Gebieten entfallen kann.

## Beschreibung

Die Erfindung betrifft eine Chipkarte mit einem Prozessorbaustein zur Speicherung und Bearbeitung von elektronischen Daten, einer Schnittstelle zum Austausch von im Prozessorbaustein gespeicherten und bearbeiteten Datenmengen und einer Anzeigevorrichtung für einzelne Daten.

Chipkarten der eingangs geschilderten Art sind in mannigfaltiger Ausgestaltung im Stand der Technik bereits bekannt. Die Grundbausteine, welche in derartigen Chipkarten enthalten sind, werden je nach gewünschter Anwendung für diese Karten durch zusätzliche Bausteine ergänzt, die zusätzlich auf der Chipkarte bzw. im Chipkartenkörper angeordnet werden müssen. So ist es beispielsweise bekannt, Chipkarten mit optischen und/oder elektrischen Schaltelementen, mit Displays, Batterien oder zusätzlichen Schnittstellen für den Anschluss externer elektronischer Bauelemente zu versehen. Durch die Vielzahl der unterschiedlichen Bauelemente, die innerhalb des Chipkartenkörpers untergebracht werden müssen, ist die Herstellung dieser bekannten Chipkarten unter Umständen außerordentlich aufwendig, weil die einzelnen Bestandteile separat hergestellt werden müssen, wobei eine spätere Integration dieser Schaltelemente eine mechanische und elektrische Verbindung mit den Basiselementen der Chipkarte erforderlich macht. Die Anordnung der zusätzlichen Bauelemente führt darüber hinaus durch die Bereitstellung entsprechender Ausnehmungen innerhalb des Chipkartenkörpers insgesamt zu einer Herabsetzung der mechanischen Festigkeit, da die geometrischen Abmessungen von Chipkarten hinsichtlich Grundriss und Dicke genormt sind und somit keiner Veränderungsmöglichkeit unterliegen.

Die Ausgestaltung der aus dem Stand der Technik bekannten Chipkarten mit zusätzlichen Bauelementen hat darüber hinaus den Nachteil, dass neben dem komplizierten und störanfälligen Aufbau des Kartenkörpers derartige Chipkarten jeweils für einen Anwendungsfall konzipiert sind und sich derartige Einzellösungen im allgemeinen nicht auf andere Problemstellungen, welche mit Hilfe der Chipkarte gelöst werden sollen, übertragen lassen.

Aufgabe der vorliegenden Erfindung ist es daher, eine Chipkarte der gattungsgemäßen Art dahingehend weiter zu entwickeln, dass durch ihren speziellen Aufbau eine Vielzahl von unterschiedlichen Anforderungen an die Chipkarte ohne Änderung des Kartenaufbaus realisiert werden kann. Die erfindungsgemäße Chipkarte soll darüber hinaus einfach und kostengünstig herstellbar sein.

Gelöst wird diese technische Problemstellung in Zusammenschau mit den gattungsbildenden Merkmalen des Anspruches 1 durch dessen im kennzeichnenden Teil dargelegte technische Lehre.

Gemäß dieser technischen Lehre weist der in die Chipkarte implantierte Prozessorbaustein mindestens einen Analogverstärker und einen Impedanzwandler zur Verarbeitung von extern gewonnenen Sensorsystemdaten, eine Baueinheit zur Erzeugung eines prozessorinternen Systemtaktes, eine Baueinheit zur Umschaltung zwischen internem und externem Systemtakt sowie einen Analog/Digitalwandler auf. Die im Einzelnen aufgeführten elektronischen Baueinheiten sind innerhalb des Prozessorbausteins, der als integrierte Schaltkreis (IC) ausgestaltet ist, angeordnet. Auf diese Weise wird vermieden, dass zusätzliche Bauelemente in den Chipkartenkörper eingebracht werden müssen, so dass zum einen der Herstellaufwand derartiger erfindungsgemäßer Chipkarten wesentlich herabgesetzt wird, und darüber hinaus die im Prozessorbaustein vorhandenen zusätzlichen elektronischen Bausteine mittels eines vorhandenen eigenen Betriebssystems den unterschiedlichen Anforderungen an eine spezielle Verwendung problemlos angepasst werden können. Der Prozessor lässt sich somit aufgrund seines speziellen Aufbaus softwaremäßig für unterschiedliche Verwendungen konfigurieren.

Spezielle Ausgestaltungen der erfindungsgemäßen Chipkarte sind zusätzlich durch die in den Unteransprüchen aufgeführten Merkmale gekennzeichnet.

Es hat sich insbesondere als zweckmäßig erwiesen, den Prozessorbaustein mit mindestens einer Treiberbaueinheit mit Ausgängen zur Ansteuerung von Ausgabeeinheiten zu versehen. Diese Ausgabeeinheiten können einen einfachen Aufbau aufweisen, indem sie beispielsweise eine Information mittels LEDs anzeigen oder sie können eine größere Datenmenge mittels spezieller Displays anzeigen, wobei darüber hinaus natürlich die Möglichkeit besteht, dass an die Chipkarte über die vorhandene Schnittstelle auch externe Ausgabeeinheiten angeschlossen werden, welche zentral über die im Prozessorbaustein vorhandene Elektronik mit Dateninformationen versorgt werden.

Die Steuerung des Ladevorganges und die Überwachung des Ladezustandes einer Stromversorgung kann zusätzlich dadurch gewährleistet werden, dass eine entsprechende Elektronikbaueinheit in den Prozessorbaustein integriert wird. Die Stromversorgung kann hierbei aus einer separaten innerhalb der Chipkarte vorhandenen Stromquelle bestehen oder ebenfalls insbesondere zur Versorgung von externen Sensoren in den Prozessorbaustein integriert sein.

Weist der Prozessorbaustein darüber hinaus Eingänge für externe Schaltelemente auf, welche in ihrem Aufbau mechanisch, piezo-elektrisch, kapazitiv oder in ähnlicher Weise gestaltet sein können, so wird hierdurch die Anwendungsvielfalt der erfindungsgemäßen Chipkarte zusätzlich erweitert.

Als Anwendung für eine oben beschriebene erfindungsgemäße Chipkarte ist beispielsweise die Erfassung und Speicherung chemischer Größen zur Bestimmung von Gewässerqualitäten möglich. Hierbei dienen auf der Chipkarte oder extern von dieser angeordnete Sensoren zur Messung von gewässerspezifischen chemischen Größen, die auf der Chipkarte ausgewertet, weiterverarbeitet und zu einer Anzeige oder Übermittlung an externe Geräte bereitgestellt werden. Bis auf die verwendeten Sensoren befinden sich entsprechend der erfindungsgemäßen Ausgestaltung alle Bauelemente innerhalb des Prozessorbausteines und werden im Rahmen einer softwaremäßigen Konfiguration für die beschriebene spezielle Anwendung vorbereitet. Auf diese Weise kann die Chipkarte beispielsweise für unterschiedliche Sensormesssysteme verwendet werden, die wiederum zur Aufnahme von optischen, akustischen und taktilen Daten eingerichtet sein können. Somit ist eine derartige Chipkarte ideal für so genannte System-on-board-Chipkarten geeignet. Durch den Wegfall verschiedener Bauelemente, die für den beispielsweise oben angeführten Fall einer Gewässerüberwachung notwendig waren, reduzieren sich natürlich die Kosten für die Herstellung erheblich, wobei für den Einbau des speziellen Prozessorbausteines auf übliche und bewährte Herstellungstechniken zurückgegriffen werden kann.

Die Chipkarte enthält insbesondere eine Schnittstelle, die für unterschiedliche Sensorsysteme konfigurierbar ist.

## Patentansprüche

1. Chipkarte mit einem Prozessorbaustein zur Speicherung und Bearbeitung von elektronischen Daten, einer Schnittstelle zum Austausch von im Prozessorbaustein vorhandenen Datenmengen und einer Anzeigevorrichtung für einzelne Daten, **dadurch gekennzeichnet, dass** der Prozessorbaustein
- mindestens einen Analogverstärker und Impedanzwandler zur Verarbeitung von extern gewonnenen Sensorsystemdaten,
- eine Baueinheit zur Erzeugung eines prozessorinternen Systemtaktes,
- eine Baueinheit zur Umschaltung zwischen internem und externem Systemtakt und
- einen Analogdigitalwandler aufweist.

2. Chipkarte nach Anspruch 1, dadurch gegenzeichnet, dass der Prozessorbaustein mindestens eine Treiberbaueinheit mit Ausgängen zur Ansteuerung von Ausgabeeinheiten aufweist.

3. Chipkarte nach Anspruch 1 oder 2, **dadurch gekennzeichnet, dass** der Prozessorbaustein mindestens einen Elektronikbaustein zur Steuerung des Ladevorganges und zur Überwachung des Ladezustandes einer Stromversorgung aufweist.

4. Chipkarte nach einem der Ansprüche 1 bis 3, dadurch gegenzeichnet, dass der Prozessorbaustein eine Stromquelle zur Versorgung externer Sensoren aufweist.

5. Chipkarte nach einem der Ansprüche 1 bis 4, **dadurch gekennzeichnet, dass** der Prozessorbaustein Eingänge für externe Schaltelemente aufweist.
